# EUROPÄISCHE PATENTSCHRIFT

(11) **EP 2 346 972 B1**
(45) Veröffentlichungstag und Bekanntmachung des Hinweises auf die Patenterteilung: **02.01.2013**
(21) Anmeldenummer: 09744330.3
(22) Anmeldetag: 21.10.2009
(51) Int. Cl.: C11C 3/04, A23K 1/16

(54) **VERFAHREN ZUR HERSTELLUNG VON FETTSÄUREESTERN EIN- ODER MEHRWERTIGER ALKOHOLE UNTER VERWENDUNG SPEZIELLER HYDROXYFUNKTIONELLER QUARTÄRER AMMONIUMVERBINDUNGEN ALS KATALYSATOREN**
METHOD FOR PRODUCING FATTY ACID ESTERS OF MONOVALENT OR POLYVALENT ALCOHOLS USING SPECIAL HYDROXY-FUNCTIONAL QUATERNARY AMMONIUM COMPOUNDS AS CATALYSTS
PROCEDE DE PRODUCTION D'ESTERS D'ACIDES GRAS D'ALCOOLS MONOVALENTS OU PLURIVALENTS EN UTILISANT DES COMPOSES D'AMMONIUM QUATERNAIRE SPECIAUX A FONCTION HYDROXY COMME CATALYSEURS

(30) Priorität: 22.10.2008 DE 102008052795
(43) Veröffentlichungstag der Anmeldung: 27.07.2011
(73) Patentinhaber: Fraunhofer-Gesellschaft zur Förderung der angewandten Forschung e.V., 80686 München (DE); Balchem Corporation, New Hampton, NY 10958 (US)
(72) Erfinder: WEIDNER, Eckhard, 44795 Bochum (DE); KRAFT, Axel, 45739 Oer-Erkenschwick (DE); GREVÉ, Anna, 44795 Bochum (DE); BROUCEK, Reinhard, 63739 Aschaffenburg (DE)
(74) Vertreter: Schubert, Helmut
(86) Internationale Anmeldenummer: PCT/EP2009/007544
(87) Internationale Veröffentlichungsnummer: WO 2010/046100

(56) Entgegenhaltungen:
- WO-A-2007/111604
- WO-A-2007/143803
- GB-A- 1 313 923
- ABBOTT A.P.; CULLIS, P.M.; GIBSON, M.J.; HARRIS, R.C.; RAVEN, E.: "Extraction of glycerol from biodiesel into a eutectic based ionic liquid" GREEN CHEMISTRY, Bd. 9, Nr. 8, August 2007 (2007-08), Seiten 868-872, XP002564405
- LIU ET AL: "Transesterification of triacetin using solid Bronsted bases" JOURNAL OF CATALYSIS, ACADEMIC PRESS, DULUTH, MN, US, Bd. 246, Nr. 2, 15. Februar 2007 (2007-02-15), Seiten 428-433, XP005887974 ISSN: 0021-9517

## Beschreibung

Die vorliegende Erfindung betrifft ein Verfahren zur Herstellung von Fettsäureestern aus Fetten und/oder Ölen biogenen Ursprungs durch Umesterung mit ein- oder mehrwertigen Alkoholen in Gegenwart einer speziellen hydroxyfunktionellen quartären Ammoniumverbindung als Katalysator.

Fettsäureester werden kommerziell durch Umesterung von Ölen und/oder Fetten biologischen Ursprungs, welche überwiegend aus Triglyceriden bestehen, mit einem Alkohol hergestellt. Dabei reagieren Triglyceride mit Alkohol in Gegenwart eines Katalysators unter Bildung von Fettsäureestern und Glycerin:

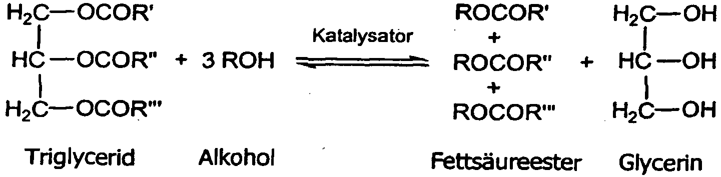

Da bei dieser Reaktion der ursprüngliche Ester, d.h. das Triglycerid, mit einem Alkohol umgesetzt wird, wird diese Umesterungsreaktion auch als Alkoholyse bezeichnet. Die Alkoholyse von Fett und/oder Öl biogenen Ursprungs ist wirtschaftlich sehr bedeutsam und hat in den letzten Jahren im Zusammenhang mit der Herstellung von Biodiesel (Fettsäuremethylester) durch Umesterung von Pflanzenöl, insbesondere Rapsöl, mit Methanol erheblich an Bedeutung gewonnen.

Die Umesterung bzw. Alkoholyse ist eine Gleichgewichtsreaktion, die in der Regel bereits durch Mischen der Ausgangsprodukte bei einer geeigneten Temperatur erfolgt. Die Reaktion verläuft jedoch so langsam, dass in kommerziellen Verfahren Katalysatoren zur Beschleunigung der Reaktion verwendet werden. Meistens werden basenkatalysierte Verfahren verwendet, da diese gegenüber den ebenfalls im Stand der Technik bekannten säurekatalysierten Verfahren unter Verwendung von Sulfon- oder Schwefelsäure erheblich schneller ablaufen (für einen Überblick siehe beispielsweise Schuchardt et al., J. Bras. Chem. Soc. 9(3): 199-210 (1996)). Als Katalysatoren in basenkatalysierten Umesterungen, insbesondere bei der Herstellung von als Biodiesel verwendeten Fettsäuremethylestern, werden meistens Kaliumhydroxid oder Natriumhydroxid bzw. die entsprechenden Methylate eingesetzt. Damit können Umsetzungsraten von >98% erreicht werden. Beide Katalysatoren hinterlassen jedoch ihren kationischen Bestandteil im Reaktionssystem und insbesondere im Glycerin, das sich beim Stehenlassen der Reaktionsmischung als separate Phase abscheidet. Dadurch wird eine aufwändige Abtrennung durch Neutralisation und Wasserwäsche notwendig.

Des Weiteren entsteht bei den alkalischen Umesterungsverfahren unter Verwendung von Natriumhydroxid oder Kaliumhydroxid eine gewisse Menge an Wasser durch Reaktion des Hydroxids mit dem eingesetzten Alkohol. Die Gegenwart von Wasser führt zur Verseifung, d.h. zur Hydrolyse der gebildeten Fettsäureester und zur Bildung von Alkalisalzen der freigesetzten Fettsäuren (sog. Seifen). Dadurch wird die Fettsäureesterausbeute durch Verbrauch des Katalysators reduziert. Ferner erschweren die gebildeten Seifen durch ihre emulgierende Wirkung die Trennung des erzeugten Glycerins von den gebildeten Fettsäureestern. Es müssen daher möglichst wasserfreie Edukte (Fette bzw. Öle und Alkohole) eingesetzt werden und die Ausgangsfette bzw. -öle sollten zudem einen geringen Anteil an freien Fettsäuren aufweisen, da die oben beschriebene Verseifung in Gegenwart freier Fettsäuren verstärkt auftritt und zu einem Anstieg der Viskosität des Reaktionsgemisches führt (siehe Freedman et al., J. Am. Oil Chem. Soc. 63(10): 1375-1380 (1986)).

Die Seifenbildung kann durch die Verwendung von Natrium- oder Kaliummethylat anstelle von Natriumhydroxid oder Kaliumhydroxid zwar verringert werden. Die Herstellung der Methylate ist jedoch deutlich teurer. Ferner erfordern diese für optimale Umsatzraten die möglichst vollständige Abwesenheit von Wasser im Reaktionssystem.

Ferner wird die Effizienz der basenkatalysierten Umesterung von Fetten und/oder Ölen biogenen Ursprungs mit Alkoholen auch maßgeblich von der Art des Alkohols bestimmt. So kann bei der Verwendung von Kaliumhydroxid oder Natriumhydroxid als Katalysator zwar grundsätzlich auch Ethanol als einwertiger Alkohol eingesetzt werden. Diese Umesterungsreaktion verläuft allerdings im Vergleich zu der Reaktion mit Methanol deutlich langsamer.

Ein weiterer Faktor, welcher die basenkatalysierte Umesterung, insbesondere die Ausbeute, signifikant beeinflusst, ist das Alkohol/Triglycerid-Verhältnis. Im Allgemeinen wird der auszutauschende Alkohol im Überschuss zugesetzt, um eine hohe Ausbeute an gewünschten Fettsäureestern zu erhalten. Je nach eingesetzten Fetten und/oder Ölen und Katalysator variiert das optimale Molverhältnis üblicherweise von 6:1 bis 45:1 (im Fall einer hohen Konzentration an freien Fettsäuren).

Neben der Art des Katalysators, der Reinheit der Reaktanten (insbesondere des Wassergehalts), der Qualität des Ausgangsöls bzw. -fetts (insbesondere des Gehalts an freien Fettsäuren) und des Alkohols (Art des Alkohols und Wassergehalt), und des Alkohol/Triglycerid-Verhältnis ist die Effektivität der herkömmlichen basenkatalysierten Umesterung stark vom Phasenverhalten während der Reaktion abhängig. Zu Beginn der Reaktion bilden die Triglyceride und der Alkohol ein zweiphasiges Reaktionsgemisch. Der Kontakt der Reaktanten ist zunächst durch die Durchmischung begrenzt und die Reaktion somit durch die Stofftransportwiderstände an der Phasengrenze Alkohol/Triglycerid limitiert. Mit fortschreitender Reaktionszeit werden Partialglyceride und Fettsäureester gebildet, die zu einer besseren Löslichkeit des Alkohols führen. Schließlich kann, insbesondere im Falle der Veresterung mit einwertigen Alkoholen, soviel Glycerin entstehen, dass dessen Löslichkeitsgrenze erreicht wird und eine separate Glycerinphase ausfällt. Dadurch verlangsamt sich in der herkömmlichen Katalyse der Umsatz der Triglyceride, da der Katalysator überproportional in die Glycerinphase gezogen wird. Die Reaktanten befinden sich jedoch hauptsächlich in der Triglyceridesterphase, so dass die Reaktion nun durch den Stofftransport und die ungünstige Verteilung des Katalysators begrenzt ist (Chiu et al., AIChE Journal 51(4): 1274-1278 (2005); Vicente et al., Ind. Eng. Chem. Res. 44: 5447-5454 (2005)).

Angesichts der oben genannten Probleme, die bei der Umesterung mit konventionell eingesetzten Katalysatoren (NaOH, KOH, Na-Methylat, K-Methylat) auftreten, wurden in den vergangenen Jahren eine Vielzahl organischer Basen im Hinblick auf deren Eignung als Katalysatoren in der basenkatalysierten Umesterung untersucht. In der wissenschaftlichen Literatur wurden verschiedene Amin-, Amidin-, (Alkyl)guanidin- und Triamino(imino)phosphoran-Verbindungen beschrieben, die als Katalysatoren bei der Umesterung von Fetten und/oder Ölen eingesetzt werden können (Schuchardt et al., J. Mol. Catal. 99: 65-70 (1995); Schuchardt et al., J. Mol. Catal. 109: 37-44 (1996); Schuchardt et al., J. Bras. Chem. Soc. 9: 199-210 (1998); Sercheli et al., J. Am. Oil Chem. Soc. 76: 1207-1210 (1999); Cerce et al., Ind. Eng. Chem. Res. 44(25): 9535-9541 (2005); Peter et al., Eur. J. Lipid Sci. Technol. 104: 324-330 (2002); Peter, S. & Weidner, E., Eur. J. Lipid Sci. Technol. 109: 11-16 (2007)).

Des Weiteren ist die Verwendung von Verbindungen mit einer Iminogruppe, tertiären Aminen, wobei die tertiären Amine mindestens eine OH-Gruppe oder NH₂-Gruppe aufweisen und keine Aminosäuren oder Derivate davon sind, und Butylamin als Katalysatoren in der Herstellung von Fettsäureestern einwertiger Alkohole mittels Alkoholyse von Fett und/oder Öl biologischen Ursprungs aus der DE 102 45 806 A1 und der WO 2004/031119 A1 bekannt. Ferner offenbaren die DE 10 2004 044 660 A1 und die WO 2006/029655 A1 die Verwendung von Kohlensäuresalzen von Guanidin oder Derivaten davon, wie 1-Aminoguanidin, als basische Katalysatoren bei der Umesterung von Fetten und/oder Ölen biologischen Ursprungs mittels Alkoholyse. Überdies ist die Verwendung eines weiteren Guanidinderivats, nämlich des N, N',N"-tris-(3-Dimethylaminopropyl)-guanidins, in der Umesterung von Sonnenblumen-, Soja- und Rapsöl aus der WO 2005/100306 A1 bekannt. Schließlich ist in der WO 2007/143803 A1 ein Verfahren zur Umsetzung von Fetten und/oder Ölen unter Einsatz eines Katalysators ausgewählt aus Salzen von Hydroxid (OH⁻) und Alkoxiden (Alkoholaten), wie Methanolat (CH₃-O⁻) oder Ethanolat (CH₃-CH₂-O⁻), mit Guanidin und N-alkylierten Derivaten davon oder mit quartären Ammoniumverbindungen beschrieben.

Die in den oben genannten wissenschaftlichen Veröffentlichungen und der erwähnten Patentliteratur beschriebenen Katalysatoren zeigen eine gute katalytische Aktivität bei der Umesterung von Triglyceriden, fungieren jedoch bei den herkömmlich eingesetzten Katalysatormengen nicht als Lösungsvermittler und können damit die oben erläuterten mit dem Phasenverhalten der Reaktionsmischung während der Umesterung einhergehenden Probleme nicht überwinden.

Zur Verbesserung des Phasenverhaltens wurde daher in der Literatur die Verwendung eines Co-Solvents vorgeschlagen. So beschreibt Kim *et al.* ein Verfahren, bei dem zur Minimierung der Stofftransportwiderstände eine zusätzliche Komponente als Co-Solvent, beispielsweise n-Hexan oder Tetrahydrofuran, eingesetzt wird. Diese Substanzen verbessern die Löslichkeit des Alkohols im Fett bzw. Öl (Kim et al., Catalysis Today 93-95: 315-320 (2004)). Ferner ist in der WO 01/12581 A1 ein zweistufiges Verfahren zur Herstellung von Fettsäuremethylester beschrieben, bei dem im zweiten Schritt eine Umesterung von Triglyceriden unter Verwendung von KOH oder NaOH als basische Katalysatoren in Gegenwart eines Co-Solvents ausgewählt aus der Gruppe bestehend aus Tetrahydrofuran, 1,4-Dioxan, Diethylether, Methyl-tert-butylether und Diisopropylether erfolgt.

Außerdem ist in der WO2007111604 ein Verfahren zur Herstellung von Fettsäureestern einwertiger Alkohole unter Verwendung eines Katalysators beschrieben, umfassend das Umsetzen von Triglyceride mit einwertigen Alkoholen in Gegenwart einer Base und einer quartäre Ammoniumverbindung. Diese Ammoniumverbindungen enthalten Alkylresten mit 4, vorzugsweise 8-18 Kohlenstoffatomen, und können Hydroxyalkylresten enthalten.

Die Verwendung eines Co-Solvents als Lösungsvermittler weist jedoch den Nachteil auf, dass eine weitere Komponente in das Reaktionssystem eingeführt wird, die später aufwändig abgetrennt werden muss.

Es ist daher eine Aufgabe der vorliegenden Erfindung ein Verfahren bereitzustellen, das die oben genannten Probleme bei der Herstellung von Fettsäureestern durch Umsetzen von Fett und/oder Öl biogenen Ursprungs mit Alkoholen in Gegenwart eines Katalysators beseitigt oder minimiert.

Diese Aufgabe wird erfindungsgemäß durch ein Verfahren gelöst, bei dem Fett und/oder Öl biogenen Ursprungs mit ein- und/oder mehrwertigen Alkoholen in Gegenwart eines Katalysators umgesetzt wird, wobei der Katalysator eine hydroxyfunktionelle quartäre Ammoniumverbindung der folgenden allgemeinen Formel (I) ist: 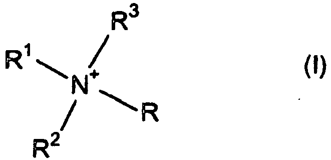 wobei R¹, R² und R³ gleich oder verschieden sind und jeweils einen unsubstituierten oder substituierten geradkettigen oder verzweigtkettigen Alkylrest mit 1 bis 8 Kohlenstoffatomen darstellen, und R ein geradkettiger oder verzweigter Hydroxyalkyl-, Hydroxyalkenyl- oder Hydroxyalkyinylrest mit 1 bis 12, vorzugsweise 1 bis 8, bevorzugter 2 bis 8 und besonders bevorzugt 2 bis 6 oder 2 bis 4 Kohlenstoffatomen darstellt. Die Substituenten können geradkettige oder verzweigte Alkyl-, Alkenyl-, Alkinyl-, Alkoxy-, Alkoxyalkyl-, Alkenyloxy- und Alkenyloxyalkylgruppen mit 1 bis 5, vorzugsweise 1 bis 3, Kohlenstoffatomen sein.

Es wurde überraschend gefunden, dass Verbindungen der oben dargestellten allgemeinen Formel (I) als Katalysatoren bei der Umesterung von Fetten und/oder Ölen biogenen Ursprungs mit ein- oder mehrwertigen Alkoholen aktiv sind. Diese Verbindungen zeichnen sich einerseits durch eine quartäre Ammoniumgruppe und andererseits durch die Absättigung einer Valenz am Stickstoffatom der quartären Ammoniumgruppe durch einen relativ kurzen geradkettigen oder verzweigten Hydroxyalkyl-, Hydroxyalkenyl- oder Hydroxyalkyinylrest aus. Mit Hilfe dieser Katalysatoren kann in äußerst effizienter Weise in einem einzigen Prozessschritt ein Fettsäureestergehalt erhalten werden, welcher der Europäischen Norm für Biodiesel (DIN EN 14214) entspricht.

Es war für einen Fachmann angesichts der Struktur der katalytisch aktiven Verbindungen gemäß der allgemeinen Formel (I) auch nicht zu erwarten, dass diese Verbindungen grenzflächenaktive Eigenschaften zeigen, die zu einer erheblichen Verbesserung der gegenseitigen Durchmischbarkeit von Alkohol und Fett und/oder Öl führen. Überraschenderweise sind nur geringe Mengen der Verbindung der allgemeinen Formel (I) notwendig, um die Löslichkeit des Alkohols in den Triglyceriden signifikant zu verbessern. Der Alkohol und die Triglyceride bilden in Gegenwart der Verbindung der allgemeinen Formel (I) eine makroskopisch homogene, optisch transparente und thermodynamisch stabile Mischung. Hierbei handelt es sich vermutlich um eine Mikroemulsion. Durch die Ausbildung einer solchen Mikroemulsion wird die Raum-Zeit-Ausbeute der Reaktion erheblich beschleunigt.

Des Weiteren wurde überraschend gefunden, dass katalytisch aktive Verbindungen gemäß der allgemeinen Formel (I) nach Abschluss der Umsetzung zu einer schnellen und vollständigen Entmischung der Glycerinphase von der Biodieselphase (Fettsäureesterphase) führen, wodurch die Trennungs- bzw. Waschkosten deutlich verringert werden können. Da sich der Katalysator überwiegend in der Glycerinphase anreichert, kann damit auch der Katalysator im Wesentlichen quantitativ mit der Glycerinphase abgetrennt werden. Üblicherweise verbleiben weniger als 1%, in der Regel weniger als 0,1%, des Katalysators, z.B. Cholin, in der Biodieselphase und mehr als 99% bzw. mehr als 99,9% in der Glycerinphase.

Ferner wurde überraschend gefunden, dass mit dem erfindungsgemäßen Verfahren Triglyceride nicht nur mit Methanol sondern auch mit Ethanol in effizienter Weise umgesetzt werden können. So wird die oben beschriebene duale Funktion der Verbindungen der allgemeinen Formel (I) als Katalysator und Lösungsvermittler auch bei der Umesterung mit Ethanol beobachtet. Die Reaktion mit Ethanol verläuft dabei vergleichbar schnell ab wie die Reaktion mit Methanol. Des Weiteren war es für einen Fachmann nicht vorhersehbar, dass mit einer Verbindungen der allgemeinen Formel (I) auch die Umesterung von Triglyceriden mit mehrwertigen Alkoholen katalysiert werden kann. So entstehen beispielsweise aus einer Mischung von Propandiol und Triglyceriden (d.h. Fett und/oder Öl) bei Zugabe einer Verbindung der allgemeinen Formel (I) Glycerinmono- und -diester und die entsprechenden Mono- und Dialkoholester von Propandiol.

Darüber hinaus wurde unerwartet gefunden, dass die erfindungsgemäßen Verbindungen der allgemeinen Formel (I) selbst in Gegenwart einer relativ hohen Wasserkonzentration immer noch eine hohe katalytische Aktivität aufweisen. Dies ist insofern überraschend, als Wasser die Gleichgewichtslage der Umesterungsreaktion eigentlich auf die Seite der Edukte verschiebt. So führen selbst Spuren von Wasser bei der Verwendung von kommerziellen basischen Katalysatoren (d.h. NaOH, KOH, Na-Methylat, K-Methylat) zu einem drastischen Ausbeuteverlust.

Die gute Wassertoleranz ist von erheblicher wirtschaftlicher Bedeutung, da dadurch der Alkohol vor der Verwendung in dem erfindungsgemäßen Verfahren nicht bzw. in geringerem Masse energie- und kostenintensiv absolutiert werden muss. Die Wassertoleranz ist beispielsweise bei der Herstellung von "echtem" Biodiesel durch Umesterung von Fetten und/oder Ölen biogenen Ursprungs mit biotechnologisch erzeugtem Bioethanol von Bedeutung und ermöglicht es, aus einer azeotropen Lösung von Alkohol und Wasser direkt Ethylester herzustellen. Damit verbessert sich der Gesamtwirkungsgrad der Ethylesterherstellung erheblich.

Die Verbindungen der allgemeinen Formel (I) kombinieren daher in einzigartiger Weise die für die katalytische Umesterung erforderliche Basizität mit der Funktion eines Lösungsvermittlers für das in dem erfindungsgemäßen Verfahren verwendete Mehrphasensystem.

Ein weiterer Vorteil des vorliegend beschriebenen Verfahrens liegt darin, dass das bei dem erfindungsgemäßen Umesterungsverfahren anfallende Hauptnebenprodukt Glycerin, insbesondere bei der Verwendung von Cholin oder einem Derivat davon als Katalysator gemäß der allgemeinen Formel (I), in der Futtermittelindustrie verwendet werden kann. Es ist bekannt, dass Glycerin beispielsweise in der Geflügelzucht als Futteradditiv bis zu einer Konzentration von etwa 5 Gew.-% eingesetzt werden kann (Cerrate et al., Int. J. Poultry Sci. 5(11): 1001-1007 (2006)). Glycerin aus konventionellen Umesterungen ist jedoch aufgrund der Salzfracht als Futteradditiv ungeeignet, da es dadurch zu Störungen im Elektrolythaushalt der Tiere kommen kann. Beim Einsatz von Cholin in dem erfindungsgemäßen Verfahren zur Herstellung von Fettsäureestern bestehen diese Problemen nicht. Cholin ist als Futteradditiv in der Ernährung von Geflügel, Wiederkäuern und Schweinen weit verbreitet. Cholinverbindungsrückstände im Glycerin sind daher für den Einsatz in der Futtermittelindustrie sogar von Vorteil und stellen neben den Fettsäureestern ein weiteres mit dem erfindungsgemäßen Verfahren erhältliches Wertprodukt dar.

Die als Katalysatoren verwendeten Verbindungen der allgemeinen Formel (I), insbesondere Cholin, beispielsweise in Form der Cholinbase oder in Form eines Cholinsalzes wie Cholincarbonat, können ferner im Gegensatz zu den kommerziell eingesetzten Katalysatoren (d.h. NaOH, KOH, Na-Methylat, K-Methylat) frei von Alkalien und Erdalkalien oder anderen Metallkationen hergestellt werden. Demzufolge kann das in dem erfindungsgemäßen Verfahren anfallende, mit Katalysator angereicherte Glycerin verbrannt werden, ohne dass eine katalysatorbedingte (Metall-)salzbildung auftritt.

Ein im Rahmen der vorliegenden Erfindung besonders geeigneter Katalysator ist eine vorstehend definierte Verbindung der allgemeinen Formel (I), wobei R¹, R² und R³ gleich oder verschieden sind und jeweils einen unsubstituierten geradkettigen Alkylrest mit 1 bis 6 Kohlenstoffatomen darstellen.

Besonders geeignete Katalysatoren zur Verwendung in dem erfindungsgemäßen Verfahren sind ferner die vorstehend definierten Verbindungen der allgemeinen Formel (I), worin R ein geradkettiger Hydroxyalkylrest mit 1 bis 12 Kohlenstoffatomen, vorzugsweise 1 bis 8, bevorzugter 2 bis 8 und besonders bevorzugt 2 bis 6 oder 2 bis 4 Kohlenstoffatomen darstellt. Vorzugsweise weist R wenigstens eine, insbesondere nur eine, Hydroxylgruppe auf, die sich vorzugsweise an der Position 2 befindet. Besonders bevorzugt ist R 2-Hydroxyethyl. Am meisten bevorzugt wird in dem erfindungsgemäßen Verfahren Cholin als Katalysator eingesetzt.

Die als Katalysatoren eingesetzten Verbindungen der allgemeinen Formel (I) können chemisch-synthetisch hergestellt oder aus biologischen Quellen gewonnen sein. Insbesondere kann auch eine Cholin-Zusammensetzung eingesetzt werden, welche bei der Herstellung von Cholin durch Ethoxylierung von Trimethylamin in Methanol erhältlich ist und neben Cholin als Hauptkomponente auch überethoxylierte Produkte der Hauptkomponente sowie überethoxyliertes Lösungsmittel, wie Methoxyethylenglykol, als Nebenprodukte in einer Menge von bis zu 10 Gew.-% enthält.

Die im erfindungsgemäßen Verfahren verwendeten Katalysatoren der allgemeinen Formel (I) können entweder in freier Form oder in Form eines Salzes, gegebenenfalls gelöst in einem organischen Lösungsmittel wie Methanol, eingesetzt werden. Geeignete Salze umfassen Salze mit organischen oder anorganischen Anionen. Bevorzugte Beispiele sind basische Salze der Verbindungen der allgemeinen Formel (I), insbesondere Hydroxid-, Phosphat- und Carbonsäuresalze, wie Hydrogencarbonat- und Carbonatsalze. Besonders bevorzugte Salze für die Verwendung in dem erfindungsgemäßen Verfahren sind insbesondere Cholinsalze, beispielsweise Cholinhydroxid, Cholinphosphat und Cholincarbonat. Gemäß einer besonderen anderen Ausführungsform der vorliegenden Erfindung sind die organischen oder anorganischen Anionen keine Hydroxid- oder Alkoholatanionen.

Ferner können die Verbindungen der allgemeinen Formel (I) im Rahmen der vorliegenden Erfindung auch in einer Form eingesetzt werden, bei welcher diese auf einem Trägermaterial getragen oder an selbiges gebunden sind, d.h. in heterogenisierter oder geträgerter Form.

Der Katalysator wird in dem erfindungsgemäßen Verfahren vorzugsweise in einer Menge von 0,01 bis 20 Gew.-%, bevorzugter in eine Menge von 0,05 bis 4,0 Gew.-%, und besonders bevorzugt in einer Menge von 0,1 bis 2,0 Gew.-%, bezogen auf das Gesamtgewicht des eingesetzten Fetts und/oder Öls biogenen Ursprungs (bzw. der eingesetzten Triglyceride), eingesetzt.

Geeignete einwertige Alkohole zur Verwendung in dem erfindungsgemäßen Verfahren umfassen Methanol, Ethanol, n-Propanol, Isopropanol und Butanol, sind jedoch nicht darauf beschränkt. Bevorzugte einwertige Alkohole umfassen Methanol, das in großen Mengen aus fossilen Rohstoffen gewonnen wird, und Ethanol, das aus biotechnologischen Prozessen leicht zugänglich ist. Als mehrwertige Alkohole eignen sich insbesondere zweiwertige und, in geringerem Maße, dreiwertige Alkohole. Bevorzugte zweiwertige Alkohole umfassen Propandiol oder Butandiol, insbesondere 1,2-Propandiol, sind jedoch nicht darauf beschränkt. Sowohl die einwertigen als auch die mehrwertigen Alkohole können alleine oder in Mischung mit einem und/oder mehreren anderen ein- oder mehrwertigen Alkoholen eingesetzt werden. Vorzugsweise wird in dem erfindungsgemäßen Verfahren ein einwertiger Alkohol ausgewählt aus Methanol und Ethanol oder ein Gemisch davon eingesetzt.

Wie oben beschrieben zeichnet sich das erfindungsgemäße Verfahren durch eine überraschend gute Wassertoleranz aus, so dass die verwendeten Alkohole einen Anteil an Wasser von bis zu etwa 10 bis 15 Gew.-% enthalten können und dennoch je nach verwendetem Alkohol eine Umsetzungsrate von 50 bis 80% erreicht werden kann. Für eine effiziente Umesterung (Umsetzungsrate > 90%) beträgt der Wasseranteil aber vorzugsweise weniger als 2 Gew.-%, insbesondere weniger als 1 Gew.-%.

Fette und/oder Öle, die in dem erfindungsgemäßen Verfahren verwendet werden können, umfassen alle Fette und/oder Öle biogenen Ursprungs sowie beliebige Mischungen davon. Der in vorliegender Erfindung verwendete Begriff "biogenen Ursprungs" bedeutet "biologischen oder organischen Ursprungs", also nicht chemischsynthetischer Herkunft. Somit umfasst der Begriff "Fette und/oder Öle biogenen Ursprungs" alle Fette und/oder Öle, die von Pflanzen, Tieren oder Mikroorganismen (insbesondere Pilze, Algen und Bakterien) gebildet werden. Fette und Öle biogenen Ursprungs bestehen aus Glyceriden (Mono-, Di- und Triglyceride), im Wesentlichen jedoch aus Triglyceriden. In dieser Beschreibung wird der Begriff "Triglyceride" daher manchmal auch synonym zu Fett und/oder Öl biogenen Ursprungs verwendet.

Vorzugsweise wird im erfindungsgemäßen Verfahren ein Fett und/oder Öl pflanzlicher Herkunft eingesetzt. Unter einem "Pflanzenöl" im Sinne der vorliegenden Erfindung wird nicht nur ein Pflanzenöl einer bestimmten Pflanze, wie z.B. Rapsöl, sondern auch beliebige Mischungen verschiedener Pflanzenöle verstanden. Beispiele für geeignete Pflanzenöle sind Baumwollsamenöl, Distelöl, Jatrophaöl, Erdnussöl, Haselnussöl, Kokosöl, Kürbiskernöl, Leinöl, Maiskeimöl, Olivenöl, Palmöl, Palmkernöl, Rapsöl (auch Rüböl genannt), Reisöl, Sojaöl, Sonnenblumenöl, Traubenkernöl und Weizenkeimöl, in raffinierter oder kaltgepresster Form, und beliebige Mischungen davon. Auch aus Algen gewonnene Öle sind einsetzbar. In vorliegender Erfindung bevorzugte Pflanzenöle sind Rapsöl, Palmöl, Sonnenblumenöl, Sojaöl oder Mischungen davon, wobei Rapsöl und Sonnenblumenöl besonders bevorzugt sind.

Zur Verwendung im erfindungsgemäßen Verfahren besonders geeignete Ausgangsfette bzw. -öle weisen eine Säurezahl von weniger als 1,0 auf, was abhängig vom jeweiligen Fett bzw. Öl etwa einer Konzentration an freien Fettsäuren von weniger als 0,5 Gew.-% entspricht. Vorzugsweise enthalten die Fette und/oder Öle einen Anteil an freien Fettsäuren von nicht mehr als 0,2 Gew.-%. In dem erfindungsgemäßen Verfahren können jedoch auch Fette und/oder Öle mit einem höheren Gehalt an freien Fettsäuren eingesetzt werden. Um ein Fett bzw. Öl mit einem sehr geringen Anteil an freien Fettsäuren zu erhalten, kann es erforderlich sein, dass die Ausgangsfette bzw. -öle vor ihrem Einsatz einer Entsäuerungsbehandlung unterzogen werden.

Wie bereits im Zusammenhang mit den einsetzbaren Alkoholen erläutert, kann auch das Fett oder Öl Restmengen an Wasser enthalten, ohne dass dies das erfindungsgemäße Verfahren signifikant negativ beeinflusst. Die Restmenge an Wasser in den Fetten und/oder Ölen, die üblicherweise in dem erfindungsgemäßen Verfahren eingesetzt werden, ist allerdings in der Regel sehr gering und beträgt typischerweise nicht mehr als etwa 1 Gew.-%.

In dem erfindungsgemäßen Verfahren wird der Alkohol üblicherweise im Überschuss zugesetzt, um eine hohe Ausbeute an gewünschten Fettsäureestern ein- oder mehrwertiger Alkohole zu erhalten. Hierbei beträgt das Molverhältnis des ein- und/oder mehrwertigen Alkohols zu dem Fett und/oder Öl biogenen Ursprungs vorzugsweise wenigstens 6:1. Dies entspricht im Fall von einwertigen Alkoholen, wie Methanol oder Ethanol, einem zweifachen stöchiometrischen Überschuss, weil mindestens 3 Mol Methanol bzw. Ethanol benötigt werden, um aus 1 Mol Triglyceriden 3 Mol Methyl- bzw. Ethylester zu bilden. Im Fall von mehrwertigen Alkoholen kann das bevorzugte Molverhältnis auch geringer sein und bei zweiwertigen Alkoholen beispielsweise wenigstens 2:1 betragen.

Zusätzlich zu den oben genannten Komponenten können der Reaktionsmischung gegebenenfalls weitere Substanzen, wie Katalysator-Stabilisatoren, zugegeben werden, welche mit den Reaktionsbedingungen und der beabsichtigen Anwendung der Reaktionsendprodukte kompatibel sind.

Die Umesterung kann in Standardrührreaktoren drucklos und unter Rückfluss durchgeführt werden. Alternativ ist die Reaktionsführung in Rohrreaktoren denkbar. Zunächst werden die Ausgangsprodukte, d.h. Fette und/oder Öle biogenen Ursprungs, und der Katalysator dem Reaktor zugeführt und im Reaktor bei einer geeigneten Temperatur zu Glycerin und dem gewünschten Fettsäureester des eingesetzten ein-und/oder mehrwertigen Alkohols umgesetzt. Nach einer Kontaktzeit (im Folgenden auch "Reaktionszeit") von wenigen Minuten wird die Bildung von Glycerin beobachtet, wobei die Umesterungsreaktion nach einer Reaktionszeit von wenigstens 15 Minuten, typischerweise 30 bis 60 Minuten, abgeschlossen ist.

Die Umsetzung erfolgt üblicherweise unter Rühren, da dadurch der Stofftransport und damit die Reaktionseffizienz erhöht werden kann. Die Temperatur der Umesterungsreaktion liegt, falls Fette eingesetzt werden, oberhalb der Schmelztemperatur des höchstschmelzenden eingesetzten Fettes. In der Regel liegt die Reaktionstemperatur des erfindungsgemäßen Verfahrens unter 250 °C. Vorzugsweise wird die Reaktionstemperatur so eingestellt, dass sie etwa im Bereich der Siedetemperatur des Reaktionsgemisches bei Atmosphärendruck liegt. Es wurde jedoch überraschend gefunden, dass die Umesterungsreaktion auch bei geringeren Temperaturen, sogar bei Raumtemperatur, in signifikantem Maße abläuft.

Gemäß einer bevorzugten Ausführungsform des erfindungsgemäßen Verfahren wird das Fett und/oder Öl biogenen Ursprungs zunächst mit dem ein- und/oder mehrwertigen Alkohol in Kontakt gebracht und dann wird der Katalysator der resultierenden Mischung zugegeben. Der Katalysator liegt dabei vorzugsweise in einem Lösungsmittel gelöst vor, wobei das Lösungsmittel vorzugsweise ein Alkohol, insbesondere der in der Umesterungsreaktion eingesetzte ein- und/oder mehrwertige Alkohol, wie Methanol oder Ethanol, ist. Alternativ kann der Katalysator auch in dem zu veresternden ein- und/oder mehrwertigen Alkohol gelöst und dann mit dem Fett und/oder Öl biogenen Ursprungs in dem Reaktor vermischt werden.

Nach Abschluss der Umsetzung von Fett und/oder Öl biogenen Ursprungs mit dem ein- und/oder mehrwertigen Alkohol in Gegenwart des hierin beschriebenen Katalysators unter Bildung von Glycerin und Fettsäureestern kann das Glycerin in einem weiteren Verfahrensschritt abgetrennt werden. Dies kann im Reaktionskessel selbst oder in gegebenenfalls nachgeschalteten Aufbereitungsstufen erfolgen. Nach Beenden des Rührens sammelt sich das Glycerin als untere Phase im Reaktionsgefäß an und kann separat abgezogen werden. Alternativ kann das Glycerin auch in nachgeschalteten Apparaten bzw. Verfahren unter Ausnutzung der Dichteunterschiede abgezogen werden. Die Phasentrennung kann schwerkraftgetrieben, d.h. durch einfaches Stehenlassen, erfolgen. Hierzu kann beispielsweise ein Absetzbehälter verwendet werden. Es können aber auch Zentrifugalkräfte, beispielsweise in Hydrozyklonen oder Zentrifugen, genutzt werden.

Der überschüssige Alkohol, beispielsweise überschüssiges Methanol oder Ethanol, kann jeweils separat aus der erhaltenen Glycerinphase und der erhaltenen Esterphase abgetrennt werden. Dies kann durch bekannte Verfahren, beispielsweise durch Destillation, erfolgen. In einer alternativen Ausgestaltung des erfindungsgemäßen Verfahrens kann der überschüssige Alkohol aber auch vor der Trennung der Glycerin-und Esterphase entfernt werden. Der rückgewonnene Alkohol kann in die Reaktion zurückgeführt werden. Aufgrund der Wassertoleranz des erfindungsgemäßen Verfahrens kann eine aufwändige Nachtrocknung des Alkohols unterbleiben bzw. das Intervall bis zum Einsatz frischen Alkohols erheblich verlängert werden.

Das Glycerin bzw. die Glycerinphase enthält im Wesentlichen die gesamte Menge der als Katalysator eingesetzten hydroxyfunktionellen quartären Ammoniumverbindung, in der Regel mehr als 99% des eingesetzten Katalysators. Das katalysatorhaltige Glycerin kann daher in einer nächsten Reaktionsstufe, d.h. in einer weiteren Umesterung, eingesetzt werden, um die Reaktion zwischen Alkoholen, insbesondere einwertigen Alkoholen, wie Methanol und/oder Ethanol, und Triglyceriden zu katalysieren. Es wurde überraschend gefunden, dass das auf diese Weise wiederverwertete Glycerin zu einer Bildung von Fettsäureestern in erheblichem Umfang führt. Eine solche Wiederverwertung des in dem Umesterungsverfahren erzeugten Glycerins verbessert die Wirtschaftlichkeit des erfindungsgemäßen Verfahrens deutlich, da auf diese Weise mit einer bestimmten Menge an insgesamt eingesetztem Katalysator mehr Fettsäureester als bisher erzeugt werden können.

Ferner kann das katalysatorhaltige Glycerin nach Abtrennung des überschüssigen Alkohols auch weiteren Verwendungen zugeführt werden. Je nach Art der eingesetzten Edukte, des eingesetzten Katalysators und des Verwendungszwecks können gegebenenfalls weitere einem Fachmann bekannte Reinigungsschritte, wie Bleichung, Filtration, Neutralisation, usw. erforderlich sein. Das erhaltene Glycerin kann stofflich oder energetisch genutzt werden. So kann das Glycerin mit dem darin angereicherten Katalysator, wie vorstehend bereits beschrieben, gegebenenfalls als Nahrungsergänzungsmittel oder Futteradditiv in der Tierindustrie oder Futtermittelindustrie verwendet werden. Alternativ kann das katalysatorhaltige Glycerin auch zur Energiegewinnung durch Verbrennung, Vergasung oder Pyrolyse oder in Fermentationsprozessen und Biogasanlagen verwendet werden.

Die erzeugte Alkoholesterphase ist bei sorgfältiger Auswahl und Vorreinigung der als Ausgangsprodukte eingesetzten Fette und/oder Öle eine klare Phase, die unter Umständen leicht gelblich verfärbt sein kann. Je nach der beabsichtigen Verwendung kann die Esterphase als solche verwendet werden. Alternativ können weitere Reinigungsschritte erforderlich sein. Solche Reinigungsschritte können Neutralisation, Entfärbung, Entfernung von Spurenkomponenten, etc. umfassen. Dies kann beispielsweise durch Sorptionsprozesse mit festen oder flüssigen Hilfsstoffen erfolgen.

Die gebildeten Ester können im Falle der mit einwertigen Alkoholen gebildeten Fettsäureester als Chemierohstoff, beispielsweise als Ausgangsprodukt für chemische Synthesen, oder als Biobrenn- oder -treibstoff verwendet werden. Beispielsweise hat das Endprodukt der Umesterung mit Methanol, d.h. Fettsäuremethylester, eine deutlich geringere Viskosität als das eingesetzte Fett und/oder Öl und kann aufgrund seiner physikalischen Eigenschaften als Ersatz für Dieselkraftstoff verwendet werden.

Die bei der Umesterung mit mehrwertigen Alkoholen, wie Propandiol, gebildeten Glycerinmonoester oder Glycerindiester können als Gemisch oder nach Aufreinigung bzw. Fraktionierung beispielsweise als Lebensmittelemulgatoren oder als Chemierohstoff, z.B. in der Waschmittelsynthese, eingesetzt werden.

Im Folgenden wird das erfindungsgemäße Verfahren durch verschiedene Beispiele näher erläutert.

### BEISPIELE

### Beispiel 1

Dieses Beispiel illustriert die Umesterung von Rapsöl mit Methanol zu Fettsäuremethylestern und Glycerin unter Verwendung von Cholinbase als Katalysator.

Ein Gemisch aus 100 g Rapsöl und 20 g Methanol (entspricht einem Molverhältnis von Alkohol zu Öl von etwa 6:1) wurde unter Rühren und bei Rücklauf auf Reaktionstemperatur (Siedetemperatur) erhitzt. Nach Erreichen der Siedetemperatur wurden 4,8 g Katalysatorlösung (Cholinbase-Lösung 44% in Methanol) zugegeben. Wenige Sekunden nach Zugabe der Katalysatorlösung wandelte sich die anfänglich trübe Dispersion aus Methanol und Öl in eine klare Mischung um und nach einigen Minuten wurde das Ausfallen von Glycerin beobachtet.

Nach einer Reaktionszeit von 60 Minuten wurde das Reaktionsgemisch in einen Rotationsverdampfer gegeben, um das überschüssige Methanol abzudestillieren (Enddruck etwa 50 mbar). Der Rückstand aus der Destillation wurde dann in einen Scheidetrichter überführt. Das Gemisch trennte sich bei Raumtemperatur in zwei Phasen.

Die untere schwerere Phase hatte eine Masse von 11,76 g und wies eine Glycerinkonzentration von ca. 85 Gew.-% auf. Die obere leichtere Phase hatte eine Masse von 97,14 g und enthielt 96,4 Gew.-% Fettsäuremethylester (Rapsölmethylester), < 2 Gew.-% Triglyceride, 0,96 Gew.-% Diglyceride, 1,12 Gew.-% Monoglyceride und 0,04 Gew.-% Glycerin, ermittelt durch Gaschromatographie gemäß DIN EN 14103 für Fettsäuremethylester und gemäß DIN EN 14105 für Partialglyceride und Glycerin.

### Beispiel 2

Es wurde das Umesterungsverfahren gemäß Beispiel 1 durchgeführt, jedoch betrug die Reaktionszeit 45 Minuten. Die resultierende obere leichtere und untere schwerere Phase wiesen eine Masse von 98,17 g bzw. 10,6 g auf. Die obere leichtere Phase enthielt 96,1 Gew.-% Fettsäuremethylester, < 2 Gew.-% Triglyceride, 0,96 Gew.-% Diglyceride, 0,91 Gew.-% Monoglyceride und 0,02 Gew.-% Glycerin.

### Beispiel 3

Es wurde das Umesterungsverfahren gemäß Beispiel 1 durchgeführt, jedoch betrug die Reaktionszeit 15 Minuten. Die resultierende obere leichtere und untere schwerere Phase wiesen eine Masse von 96,40 g bzw. 11,06 g auf. Die obere leichtere Phase enthielt 93,7 Gew.-% Fettsäuremethylester, < 2 Gew.-% Triglyceride, 1,96 Gew.-% Diglyceride, 1,30 Gew.-% Monoglyceride und 0,03 Gew.-% Glycerin.

### Beispiel 4

Es wurde das Umesterungsverfahren gemäß Beispiel 1 durchgeführt, verwendet wurde jedoch ein Gemisch aus 100 g Rapsöl und 14 g Methanol (Molverhältnis Alkohol:Öl von etwa 4,5:1) und 5,0 g Katalysatorlösung (Cholinbase-Lösung 44% in Methanol) und die Reaktionszeit betrug 30 Minuten.

Die resultierende obere leichtere Phase hatte eine Masse von 99,10 g und die untere schwerere Phase hatte eine Masse von 10,6 g. Die obere leichtere Phase enthielt 90,6 Gew.-% Fettsäuremethylester, 2,19 Gew.-% Triglyceride, 2,63 Gew.-% Diglyceride, 1,42 Gew.-% Monoglyceride und 0,02 Gew.-% Glycerin.

### Beispiel 5

Dieses Beispiel illustriert die Umesterung von Rapsöl mit Ethanol zu Fettsäureethylestern und Glycerin unter Verwendung von Cholinbase als Katalysator.

Ein Gemisch aus 100 g Rapsöl und 20 g Ethanol (entspricht einem Molverhältnis von Alkohol zu Öl von etwa 4,2:1) wurde unter Rühren und bei Rücklauf auf Reaktionstemperatur (Siedetemperatur) erhitzt. Nach Erreichen der Siedetemperatur wurden 4,8 g Katalysatorlösung (Cholinbase-Lösung 44% in Methanol) zugegeben. Wenige Sekunden nach Zugabe der Katalysatorlösung wandelte sich die anfänglich trübe Dispersion aus Ethanol und Öl in eine klare Mischung um und nach einigen Minuten wurde das Ausfallen von Glycerin beobachtet.

Nach einer Reaktionszeit von 45 Minuten wurde das Reaktionsgemisch in einen Rotationsverdampfer gegeben, um das überschüssige Ethanol abzudestillieren (Enddruck etwa 50 mbar). Der Rückstand aus der Destillation wurde dann in einen Scheidetrichter überführt. Das Gemisch trennte sich bei Raumtemperatur in zwei Phasen.

Die untere schwerere Phase hatte eine Masse von 17,0 g und die Glycerinkonzentration betrug ca. 43 Gew.-%. Die obere leichtere Phase hatte eine Masse von 95,80 g und enthielt 87,1 Gew.-% Fettsäureethylester (Rapsölethylester), <1 Gew.-% Triglyceride, 3,63 Gew.-% Diglyceride, 1,5 Gew.-% Monoglyceride und 0,04 Gew.-% Glycerin, ermittelt mittels Gaschromatographie gemäß DIN EN 14103.

### Beispiel 6

Dieses Beispiel illustriert die Umesterung von Rapsöl mit wasserhaltigem Methanol zu Fettsäuremethylestern und Glycerin unter Verwendung von Cholinbase als Katalysator.

Das verwendete Verfahren entspricht im Wesentlichen dem Verfahren gemäß Beispiel 2, wobei jedoch dem Gemisch aus 100 g Rapsöl, 20 g Methanol (Molverhältnis Alkohol:Öl von etwa 6:1) und 4,8 g Katalysatorlösung (Cholinbase-Lösung 44% in Methanol) insgesamt 2 g Wasser zugesetzt wurde (entspricht einem Wassergehalt von 8,8 Gew.-%, bezogen auf die Gesamtalkoholmenge, d.h. 20 g Methanol plus die Menge Alkohol, die durch die Katalysatorlösung ins System eingebracht wurde).

Die resultierende obere leichtere Phase hatte eine Masse von 97,50 g und enthielt 74,6 Gew.-% Fettsäuremethylester, > 20 Gew.-% Triglyceride, 5,24 Gew.-% Diglyceride, 1,17 Gew.-% Monoglyceride und 0,02 Gew.-% Glycerin.

### Beispiel 7

Dieses Beispiel illustriert die Umesterung von Rapsöl mit wasserhaltigem Ethanol zu Fettsäureethylestern und Glycerin unter Verwendung von Cholinbase als Katalysator.

Das verwendete Verfahren entspricht im Wesentlichen dem Verfahren gemäß Beispiel 5, wobei jedoch dem Gemisch aus 100 g Rapsöl, 20 g Ethanol (Molverhältnis Alkohol:Öl von etwa 4,2:1) und 4,8 g Katalysatorlösung (Cholinbase-Lösung 44% in Methanol) insgesamt 0,9 g Wasser zugesetzt wurde (entspricht einem Wassergehalt von 4,0 Gew.-%, bezogen auf die Gesamtalkoholmenge, d.h. 20 g Ethanol plus die Menge Alkohol, die durch die Katalysatorlösung ins System eingebracht wurde). Im Fall von Ethanol korrespondiert dieser Wassergehalt mit demjenigen von azeotropem Ethanol.

Die resultierende obere leichtere Phase hatte eine Masse von 100,2 g und enthielt 60,6 Gew.-% Fettsäureethylester, 5,50 Gew.-% Triglyceride, 10,94 Gew.-% Diglyceride, 10,65 Gew.-% Monoglyceride und > 0,55 Gew.-% Glycerin.

### Beispiel 8

Dieses Beispiel illustriert die Umesterung von Rapsöl mit Methanol zu Fettsäuremethylestern und Glycerin unter Verwendung von Cholincarbonat als Katalysator.

Das verwendete Verfahren entspricht im Wesentlichen dem Verfahren gemäß Beispiel 1, wobei als Katalysatorlösung eine Cholincarbonat-Lösung 74% in Methanol verwendet wurde. Die resultierende obere leichtere Phase hatte eine Masse von 98,2 g, während die untere schwerere Phase eine Masse von 5,7 g hatte. Die obere leichtere Phase enthielt 56,3 Gew.-% Fettsäuremethylester, > 20 Gew.-% Triglyceride, 20,96 Gew.-% Diglyceride, 4,32 Gew.-% Monoglyceride und 0,11 Gew.-% Glycerin.

### Beispiel 9

Dieses Beispiel illustriert die Umesterung von Rapsöl mit Ethanol zu Fettsäureethylestern und Glycerin unter Verwendung von Cholincarbonat als Katalysator.

Das verwendete Verfahren entspricht im Wesentlichen dem Verfahren gemäß Beispiel 5, jedoch wurde als Katalysatorlösung eine Cholincarbonat-Lösung 74% in Methanol verwendet. Die resultierende obere leichtere Phase hatte eine Masse von 100,0 g, während die untere schwerere Phase eine Masse von 6,2 g hatte. Die obere leichtere Phase enthielt 62,3 Gew.-% Fettsäureethylester, 12,95 Gew.-% Triglyceride, 17,47 Gew.-% Diglyceride, 5,22 Gew.-% Monoglyceride und 0,48 Gew.-% Glycerin.

### Beispiel 10

Dieses Beispiel illustriert die Umesterung von Rapsöl mit 1,2-Propandiol zu Fettsäureestern und Glycerin unter Verwendung von Cholinbase als Katalysator.

Ein Gemisch aus 50 g Rapsöl und 10 g 1,2-Propandiol (entspricht einem Molverhältnis von Alkohol zu Öl von etwa 2,5:1) wurde unter Rühren und bei Rücklauf auf Reaktionstemperatur (Siedetemperatur) erhitzt. Nach Erreichen der Siedetemperatur wurden 4,8 g Katalysatorlösung (Cholinbase-Lösung 44% in Methanol) zugegeben. Wenige Sekunden nach Zugabe der Katalysatorlösung wandelte sich die anfänglich trübe Dispersion aus 1,2-Propandiol und Öl in eine klare Mischung um.

Nach einer Reaktionszeit von 30 Minuten wurde das überschüssige 1,2-Propandiol mit einem Rotationsverdampfer (Enddruck 50 mbar) abgetrennt. Der Rückstand (homogene Phase) wies folgende Zusammensetzung auf: 11 Gew.-% Monoglyceride, 21,7 Gew.-% Diglyceride, 1,2 Gew.-% Triglyceride, 4 Gew.-% Glycerin. Des Weiteren entstanden geringe Mengen an Methylester aus dem Methanolanteil, der durch die methanolische Lösung des Katalysators eingetragen wurde.

### Beispiel 11

Dieses Beispiel illustriert die Umesterung von Rapsöl mit Methanol zu Fettsäuremethylestern und Glycerin unter Verwendung einer wiederverwerteten Cholinbase-haltigen Glycerinphase.

Zunächst wurde das Umesterungsverfahren gemäß Beispiel 1 durchgeführt, jedoch wurden 200 g Rapsöl, 24 g Methanol und 20 g Katalysatorlösung (Cholinbase-Lösung 20 % in Methanol) eingesetzt. Die resultierende schwerere Phase (25 g Cholinbasehaltige Glycerinphase) wurde abgetrennt und ohne weitere Behandlung als Katalysator für eine weitere Umesterung eingesetzt. Dazu wurde ein Gemisch aus 200 g Rapsöl, 40 g Methanol und 25 g der Cholinbase-haltigen Glycerinphase aus der ersten Umesterung unter Rühren und bei Rücklauf auf Reaktionstemperatur (Siedetemperatur) erhitzt. Nach 60 Minuten wurde der Versuch beendet und die Produktphasen wie in Beispiel 1 beschrieben aufbereitet.

Die resultierende obere leichtere und untere schwerere Phase wiesen eine Masse von 203,0 g bzw. 30,44 g auf. Die obere leichtere Phase enthielt 67,58 Gew.-% Fettsäuremethylester, 17,58 Gew.-% Triglyceride, 8,13 Gew.-% Diglyceride, 2,28 Gew.-% Monoglyceride und 0,06 Gew.-% Glycerin.

## Patentansprüche

1. Verfahren zur Herstellung von Fettsäureestern ein- oder mehrwertiger Alkohole unter Verwendung eines Katalysators, umfassend das Umsetzen von Fett und/oder Öl biogenen Ursprungs mit ein- und/oder mehrwertigen Alkoholen in Gegenwart eines Katalysators, wobei der Katalysator eine hydroxyfunktionelle quartäre Ammoniumverbindung der folgenden allgemeinen Formel (I) ist: 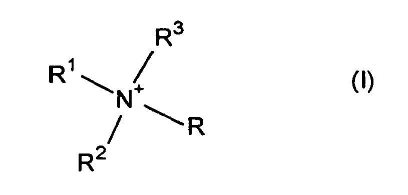 wobei R¹, R² und R³ gleich oder verschieden sind und jeweils einen unsubstituierten oder substituierten geradkettigen oder verzweigten Alkylrest mit 1 bis 8 Kohlenstoffatomen darstellen, und
R ein geradkettiger oder verzweigter Hydroxyalkyl-, Hydroxyalkenyl- oder Hydroxyalkinylrest mit 1 bis 12 Kohlenstoffatomen darstellt.

2. Verfahren nach Anspruch 1, wobei R¹, R² und R³ gleich oder verschieden sind und jeweils einen unsubstituierten geradkettigen Alkylrest mit 1 bis 6 Kohlenstoffatomen darstellen.

3. Verfahren nach Anspruch 1 oder 2, wobei R ein geradkettiger Hydroxyalkylrest mit 1 bis 12 Kohlenstoffatomen darstellt.

4. Verfahren nach einem der Ansprüche 1 bis 3, wobei R 2-Hydroxyethyl ist.

5. Verfahren nach einem der Ansprüche 1 bis 4, wobei als Katalysator Cholin oder ein Salz davon eingesetzt wird.

6. Verfahren nach einem der Ansprüche 1 bis 5, wobei der Katalysator in einer Menge von 0,01 bis 4,0 Gew.-%, bezogen auf das Gewicht des eingesetzten Fetts und/oder Öls biogenen Ursprungs, eingesetzt wird.

7. Verfahren nach einem der Ansprüche 1 bis 6, wobei der einwertige Alkohol aus der Gruppe bestehend aus Methanol, Ethanol, n-Propanol, Isopropanol, Butanol und Mischungen davon ausgewählt ist und der mehrwertige Alkohol ein aus der Gruppe bestehend aus Propandiol, Butandiol und Mischungen davon ausgewählter zweiwertiger Alkohol ist.

8. Verfahren nach einem der Ansprüche 1 bis 7, wobei das eingesetzte Fett und/oder Öl biogenen Ursprungs weniger als 0,5 Gew.-% freie Fettsäuren enthält.

9. Verfahren nach einem der Ansprüche 1 bis 8, wobei das Molverhältnis des ein- und/oder mehrwertigen Alkohols zu dem Fett und/oder Öl biogenen Ursprungs mindestens 6:1 beträgt.

10. Verfahren nach einem der Ansprüche 1 bis 9, ferner umfassend das Aufreinigen der gebildeten Fettsäureester ein- oder mehrwertiger Alkohole durch Abtrennen der gebildeten Nebenprodukte.

11. Verfahren nach Anspruch 10, wobei das gebildete Nebenprodukt ein Glycerinprodukt, umfassend eine katalysatorhaltige Glycerinfraktion, ist.

12. Verfahren nach einem der Ansprüche 1 bis 11, wobei die als Katalysator eingesetzte hydroxyfunktionelle quartäre Ammoniumverbindung in Form einer Glycerinfraktion eingesetzt wird, die gemäß einem Verfahren nach einem der Ansprüche 1 bis 11 erhältlich ist und in welcher die als Katalysator eingesetzte hydroxyfunktionelle quartäre Ammoniumverbindung angereichert ist.

## Claims

1. A method for producing fatty acid esters of monohydric or polyhydric alcohols using a catalyst, comprising the reaction of fat and/or oil of biogenic origin with monohydric and/or polyhydric alcohols in the presence of a catalyst, where the catalyst is a hydroxy-functional quaternary ammonium compound of the following general formula (I): 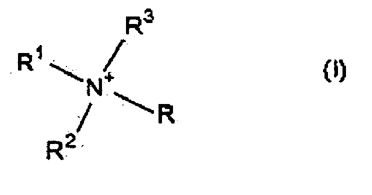 where R¹, R² and R³ are identical or different and each is an unsubstituted or substituted straight-chain or branched alkyl residue with 1 to 8 carbon atoms and
R is a straight-chain or branched hydroxyalkyl, hydroxyalkenyl or hydroxyalkynyl residue with 1 to 12 carbon atoms.

2. The method according to claim 1, where R¹, R² and R³ are identical or different and each is an unsubstituted straight-chain alkyl residue with 1 to 6 carbon atoms.

3. The method according to claim 1 or 2, where R is a straight-chain hydroxyalkyl residue with 1 to 12 carbon atoms.

4. The method according to any of claims 1 to 3, where R is 2-hydroxyethyl.

5. The method according to any of claims 1 to 4, where choline or a salt thereof is used as catalyst.

6. The method according to any of claims 1 to 5, where the catalyst is used in an amount of 0.01 to 4.0% by weight, based on the weight of fat and/or oil of biogenic origin used.

7. The method according to any of claims 1 to 6, where the monohydric alcohol is selected from the group consisting of methanol, ethanol, n-propanol, isopropanol, butanol and mixtures thereof and the polyhydric alcohol is a dihydric alcohol selected from the group consisting of propanediol, butanediol and mixtures thereof.

8. The method according to any of claims 1 to 7, where the fat and/or oil of biogenic origin used comprises less than 0.5% by weight of free fatty acids.

9. The method according to any of claims 1 to 8, where the molar ratio of the monohydric and/or polyhydric alcohol to the fat and/or oil of biogenic origin is at least 6:1.

10. The method according to any of claims 1 to 9, further comprising the purification of the fatty acid esters formed from monohydric or polyhydric alcohols, by removal of the by-products formed.

11. The method according to claim 10, where the byproduct formed is a glycerol product, comprising a catalyst-containing glycerol fraction.

12. The method according to any of claims 1 to 11, where the hydroxy-functional quaternary ammonium compound used as catalyst is used in the form of a glycerol fraction which is obtainable by a method according to any of claims 1 to 11 and in which the hydroxy-functional quaternary ammonium compound used as catalyst is concentrated.

## Revendications

1. Procédé pour la préparation d'esters d'acide gras d'alcools monovalents ou polyvalents, en utilisant un catalyseur comprenant la transformation de graisse et/ou d'huile d'origine biogène avec des alcools monovalents et/ou polyvalents en présence d'un catalyseur, le catalyseur étant un composé d'ammonium quaternaire à fonction hydroxy de la formule générale (I) suivante : 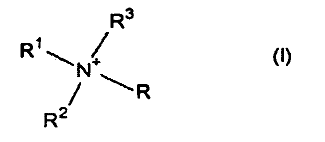 où
R¹, R² et R³ sont identiques ou différents et représentent à chaque fois un radical alkyle non substitué ou substitué, linéaire ou ramifié, comprenant 1 à 8 atomes de carbone, et
R représente un radical hydroxyalkyle, hydroxyalcényle ou hydroxyalcynyle linéaire ou ramifié comprenant 1 à 12 atomes de carbone.

2. Procédé selon la revendication 1, R¹, R² et R³ étant identiques ou différents et représentant à chaque fois un radical alkyle non substitué, linéaire comprenant 1 à 6 atomes de carbone.

3. Procédé selon la revendication 1 ou 2, R représentant un radical hydroxyalkyle linéaire comprenant 1 à 12 atomes de carbone.

4. Procédé selon l'une quelconque des revendications 1 à 3, R représentant 2-hydroxyéthyle.

5. Procédé selon l'une quelconque des revendications 1 à 4, en utilisant, comme catalyseur, la choline ou un sel de celle-ci.

6. Procédé selon l'une quelconque des revendications 1 à 5, le catalyseur étant utilisé en une quantité de 0,01 à 4,0% en poids, par rapport au poids de la graisse et/ou de l'huile d'origine biogène utilisée.

7. Procédé selon l'une quelconque des revendications 1 à 6, l'alcool monovalent étant choisi dans le groupe constitué par le méthanol, l'éthanol, le n-propanol, l'isopropanol, le butanol et leurs mélanges et l'alcool polyvalent étant un alcool divalent choisi dans le groupe constitué par le propanediol, le butanediol et leurs mélanges.

8. Procédé selon l'une quelconque des revendications 1 à 7, la graisse et/ou l'huile d'origine biogène utilisée contenant moins de 0,5% en poids d'acides gras libres.

9. Procédé selon l'une quelconque des revendications 1 à 8, le rapport molaire de l'alcool monovalent et/ou polyvalent à la graisse et/ou à l'huile d'origine biogène valant au moins 6:1.

10. Procédé selon l'une quelconque des revendications 1 à 9, comprenant en outre la purification des esters d'acide gras d'alcools monovalents ou polyvalents formés par séparation des produits secondaires formés.

11. Procédé selon la revendication 10, le produit secondaire formé étant un produit du glycérol, comprenant une fraction de glycérol contenant le catalyseur.

12. Procédé selon l'une quelconque des revendications 1 à 11, le composé d'ammonium quaternaire à fonction hydroxy utilisé comme catalyseur étant utilisé sous forme d'une fraction de glycérol qui peut être obtenue selon un procédé selon l'une quelconque des revendications 1 à 11 et dans laquelle le composé d'ammonium quaternaire à fonction hydroxy utilisé comme catalyseur est enrichi.
